# EUROPEAN PATENT SPECIFICATION

(11) **EP 1 848 362 B1**
(45) Date of publication and mention of the grant of the patent: **20.07.2011**
(21) Application number: 06710334.1
(22) Date of filing: 08.02.2006
(51) Int. Cl.: A61C 1/04

(54) **OPERATING UNIT OF A DENTAL TOOL AND DEVICE FOR DENTAL USE**
BETRIEBSEINHEIT EINES DENTALWERKZEUGS UND VORRICHTUNG FÜR DEN DENTALGEBRAUCH
UNITE D'OPERATION D'OUTILS DENTAIRES ET DISPOSITIF A USAGE DENTAIRE

(30) Priority: 16.02.2005 IT VI20050044
(43) Date of publication of application: 31.10.2007
(73) Proprietor: Zanini, Valerio, 37047 San Bonifacio VR (IT)
(72) Inventor: Zanini, Valerio, 37047 San Bonifacio VR (IT)
(74) Representative: Ziliotto, Tiziano
(86) International application number: PCT/IB2006/000236
(87) International publication number: WO 2006/087614

(56) References cited:
- DE-U1- 8 607 407
- US-A- 1 356 352
- US-A1- 2002 034 716
- US-A1- 2003 224 322
- PATENT ABSTRACTS OF JAPAN vol. 1997, no. 11, 28 November 1997 (1997-11-28) -& JP 09 173358 A (NAKANISHI:KK), 8 July 1997 (1997-07-08)

## Description

The invention concerns an operating unit of a dental tool and a corresponding device for dental use, particularly suited to be used in endosseous implants to anchor artificial teeth.

It is well known that for the correction of malformations of the maxillary bones and/or abnormal teeth position at aesthetic and/or functional level various dental techniques are applied.

One of these techniques is implantology, according to which implants that are also called fixtures are applied.

More precisely, according to this technique one or more artificial support structures are inserted in the maxilla or in the mandible, said structures being constituted by laminae and/or screws, to which the artificial teeth are then anchored.

These support structures are generally anchored to fastening bushes screwed onto cavities previously made in the mandible.

To make these cavities the known art requires the use of special dental devices. These devices substantially comprise a casing, also called dental shaft, that can be grasped by the user, in which there is an operating unit suited to set in motion a rotary tool by means of a transmission/reduction unit.

The operating unit comprises a pneumatic or electric micro motor, fed by a corresponding power unit that can be independent or connected to the dental chair.

The transmission/reduction unit, also called handpiece, is provided with a tool-carrier head with rapid coupling.

The tool is constituted by a dental file or rotating tip whose speed is controlled by means of a pedal-operated power regulator that acts on the power unit.

The device is also provided with a suction unit, necessary to remove the biological fluids and the residues generated during the operation.

From an operational point of view the dentist, once he/she has identified the area where the screw or fixtures must be implanted, chooses the tool that is most suitable for making the cavity that will house the selected structure.

Then he/she applies the tool to the tool carried head, sets its rotating speed, and positions the suction cannula near the operating area.

Finally he/she starts the equipment and guides the rotary tool, at the same time checking its speed, position and inclination with respect to the mandible.

A first drawback of the devices for dental use described above is represented by their high cost that, besides justifying their purchase only for those dentists who make a high number of operations of this kind, makes these operations particularly expensive.

A further inconvenience is represented by the fact that these devices are not easy to use and require manual skill that can be acquired only after many operations. Another drawback is constituted by the fact that the use of these devices does not respect completely the bone implant on which the operation is carried out, due to the high temperatures reached by the bone tissue near the involved areas.

This causes inevitable, and sometimes irretrievable damage to the bone tissue present in the area where the operation is carried out.

This makes it necessary to use a further machine comprising a sterile pump provided with a cannula suited to sprinkle the involved area with sterilized water in order to maintain the temperature in the area below the critical value of 50°C, over which the bone tissue dies.

A further drawback connected to the previous one is represented by the fact that said sterile pump is expensive.

Another drawback is represented by the fact that the dimensions of the necessary irrigation cannulae make it difficult to work in the involved area.

Another drawback is constituted by the fact that during the various phases of the operation the number of revolutions of the tool must be changed, even considerably, at the same time maintaining appropriate working torques. Sometimes this makes the use of the motor speed adjusting means insufficient and makes it necessary to introduce a mechanical reducer or multiplier on the revolving shaft by replacing the transmission/reduction unit.

A further drawback, connected to the previous one, is constituted by the cost of these handpieces.

A further drawback is represented by the fact that unskilled use of the rotary tool may damage the patient, even seriously.

Document JP 9173358 shows an operating unit as defined by the preamble of claim 1.

The object of the present invention is to eliminate the drawbacks mentioned above.

In particular, it is a first object of the invention to carry out an operating unit for dental devices and a corresponding device that are considerably less expensive than the devices of the known, type.

It is a further aim of the invention to carry out a device that, compared to the known devices used for the same operation, reduces the stress to which the patient and the involved bone tissue are subjected

It is another aim of the invention to carry out a unit and a device that allow more precise cavities to be made.

It is a further aim of the invention to propose a device that during use makes it possible to maintain temperatures of the bone tissue that are lower than the temperatures reached by using devices of the known type.

It is a further aim of the invention to carry out a device that during use does not need irrigation pumps.

It is another aim of the invention to carry out a device that allows the dentist to maintain maximum control of the tool during the operation, in order to reduce the margin of error to the minimum and eliminate damage due to lack of skill.

It is a further aim of the invention to carry out a device that is easy to use and does not require particular skills.

It is another aim to carry out a device that is more compact than the devices of the known type that are comparable to it.

It is another, yet not the least aim of the invention to carry out an operating unit and a device that are simple and reliable, and do not require costly and frequent maintenance.

The aims described above are achieved by a device for dental use carried out according to claim 1.

Advantageously, and surprisingly the operating unit and the device proposed allow the user to maintain direct, sensitive and continuous control over the tool for the whole duration of the operation.

Still to advantage, the proposed device makes it possible to adjust also the pressure exerted on the involved region in a sensitive and direct manner, considerably reducing the margin of error.

Still advantageously, the device described can also be used as a wrench to apply the threaded pins, by simply locking the free rotation of the tool-carrier head. Still advantageously, the device described can be used in any place and circumstance, since it needs no energy source for operation.

The aims and advantages described above will be highlighted in greater detail in the description of some preferred embodiments of the invention, provided as examples without limitation, with reference to the above drawings, wherein:
- Figure 1 is a side view of an example of an operating unit and a device which do not form part of the invention;
- Figure 2 shows a longitudinal section of the unit and the device shown in Figure 1;
- Figure 3 is a side view of another example of an operating unit and a device which do not form part of the invention;
- Figure 4 shows a longitudinal section of the unit and the device shown in Figure 3;
- Figure 5 is a side view of an embodiment of an operating unit and a device carried out according to the invention;
- Figure 6 shows a longitudinal section of the unit and the device shown in Figure 5;
- Figure 7 shows a side view of a further example of an operating unit and a device which do not form part of the invention.

The examples of embodiment of the invention described below refer to operating units of a dental tool and to a corresponding device, particularly suited to be used to apply implantology techniques and more precisely to make the cavities into which the screws or fixtures are inserted.

It is clear that the proposed solution can be applied also to devices for dental use suited to make any cavity or opening in general, as specified below.

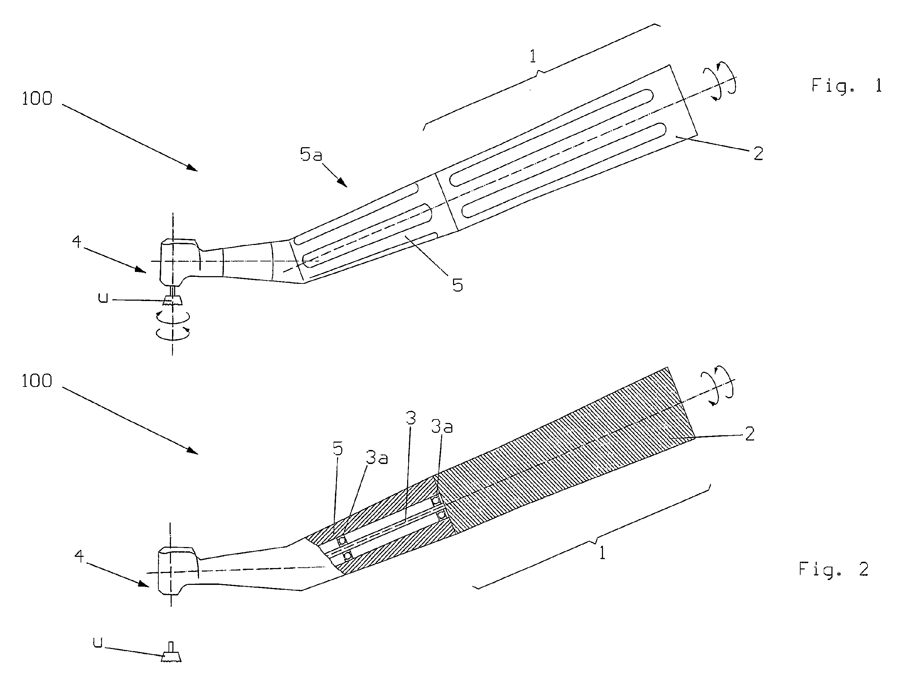

An example of embodiment of an operating unit and of a device for implantology carried out according to the invention are shown in Figures 1 and 2, where they are indicated as a whole by 1 and 100, respectively.

According to the invention, the device 100 comprises the operating unit 1 that is equipped with actuator means suited to transmit the motion generated manually by the user to the tool U.

In particular, in the example shown said actuator means comprise a handle or handgrip 2 suited to be grasped and set rotating by the user.

The handgrip 2 is integral with one end of a transmission shaft 3 provided, at the other end, with fastening means 4 suited to fasten the replaceable rotary tool U. The shaft 3 is positioned on bearings 3a and housed into a casing or handpiece 5 in which it is possible to identify at least one gripping area 5a for the user.

To advantage, the operating unit 1 and the device 100 proposed herein use the force generated by the user to set the tool U in motion and therefore they do not need a power or feeding unit for their operation.

More precisely, according to the invention the power unit of the device is constituted by the hand of the user that acts directly on the handgrip 2.

As regards the tool U, it is constituted by a dental file or a rotating tip that is applied to the fastening means 4 comprising a tool-carrier head with rapid coupling.

A first example, not represented herein for the sake of brevity, is differentiated from the previous one due to the fact that it is also provided with means suited to lock the transmission shaft 3 and/or the handgrip 2. Said locking means, which can be selectively activated by the user and comprise, for example, a ratchet system, advantageously allow the device to be transformed into a useful tool that can be grasped by the user to tighten or loosen, for example, the screws that make up the implant itself.

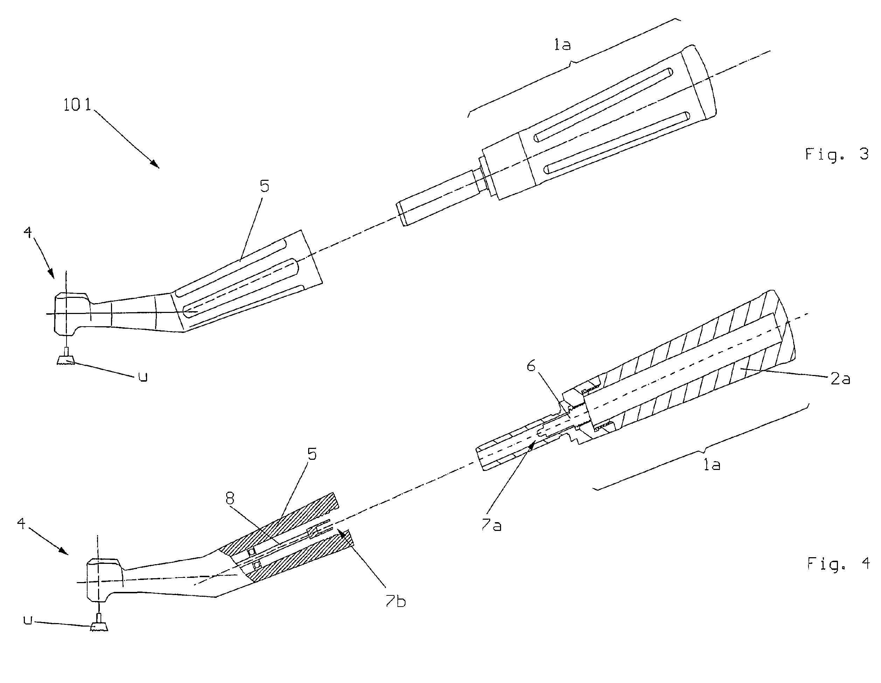

A further example indicated as a whole by 101 in Figures 3 and 4, is differentiated from the previous one due to the fact that the operating unit 1a is removably connected to the handpiece 5 of the device 101.

In particular, in this embodiment the operating unit 1a comprises a driving shaft 6, visible in Figure 4, integral with the handgrip 2a and provided with first coupling members 7a cooperating with second coupling members 7b integral with a driven shaft 8 that transmits the rotary motion to the tool U.

In the case at hand said coupling members 7a, 7b comprise a self-centering joint with rapid coupling, of the male-female type, whose parts are integral with the driving shaft 6 and the driven shaft 8, respectively.

According to a preferred and advantageous embodiment of the invention, the first coupling members 7a are compatible with the corresponding coupling members with which the known handpieces described above are provided.

This further increases the applicability and versatility of the proposed operating unit, making it compatible also with some parts of devices of the known type.

A further embodiment of the invention not represented herein is differentiated from the previous ones due to the fact that it comprises replaceable mechanical interface means, suited to be interposed between the first and second coupling members 7a, 7b.

This solution advantageously makes it possible to apply the proposed operating unit also to handpieces having different coupling members, by simply applying suitable mechanical interface means.

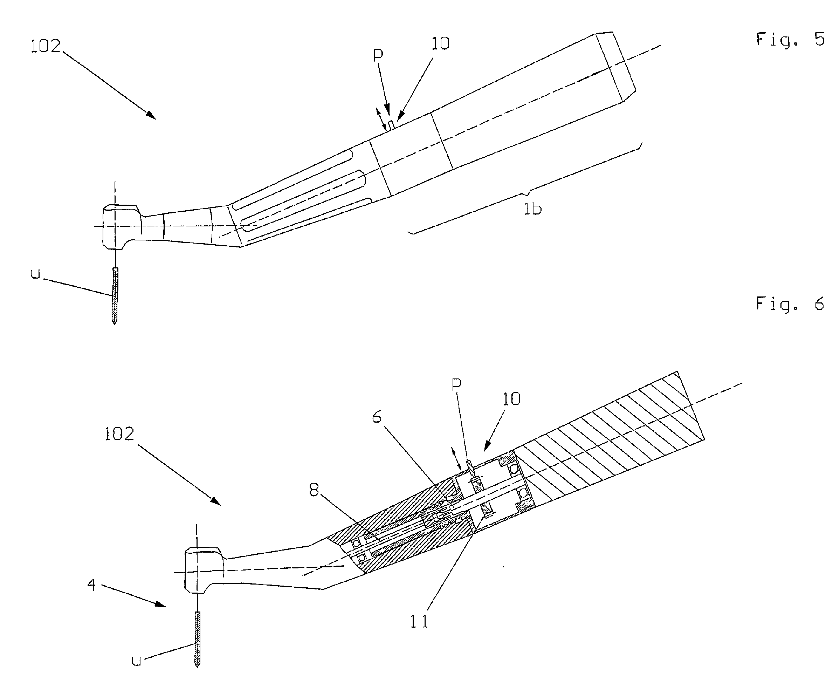

An embodiment of the operating unit and of the device carried out according to the invention, indicated by 1b and 102, respectively, in Figures 5 and 6, is differentiated from the previous one due to the fact that the actuator means comprise a ratchet system that cooperates with the driving shaft 6 and can be operated by the user by means of a button 10.

In this case the rotation of the tool U is obtained by the user by exerting a pressure P on the button 10 that, through the above mentioned mechanical members, transforms the motion into the rotation of the tool U.

In the case in question said mechanical members comprise, as explained above, a ratchet system with elastic return, provided with a gear wheel 11 integral with the driving shaft 6 and a pawl and/or rack that are not visible.

A further embodiment of the invention, not represented herein, is differentiated from the previous one due to the fact that between the driving shaft 6 and the driven shaft 8 there is a reduction unit suited to change the ratio between the rotation speed of the two shafts and thus between the speed of the tool U and the movement transmitted by the user through the actuator means.

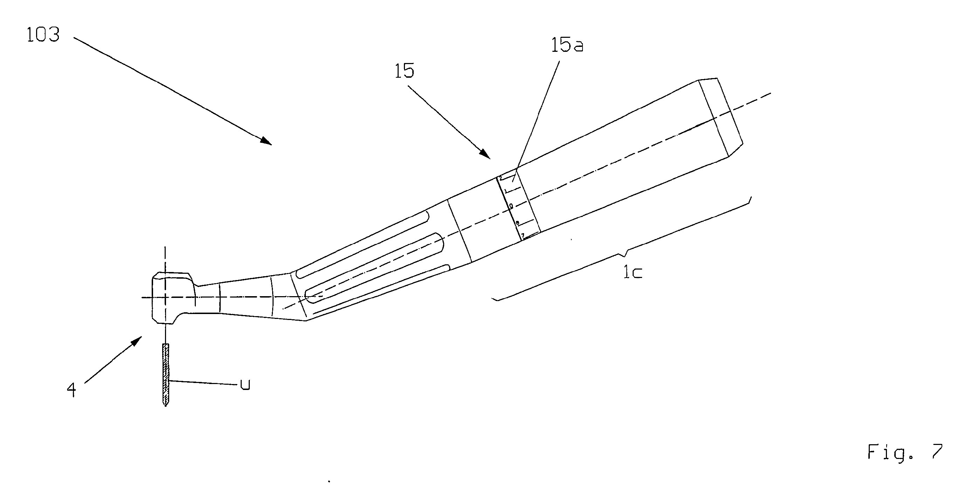

A further construction variant of the operating unit and the device proposed herein, indicated by numbers 1c and 103, respectively, in Figure 7, is differentiated from the previous one due to the fact that between the driven shaft and the driving shaft there is a clutch unit 15 provided with an adjusting metal ring 15a that makes it possible to control the maximum torque the user can apply to the tool U.

The way the operating unit and the device proposed herein work will be described below with reference to the embodiment shown in Figure 1.

From a practical point of view the user, who is usually a doctor, after identifying the area where the support structure must be implanted, chooses the tool U that is most suitable for the operation to be carried out.

The he/she applies the tool U, usually a dental file, to the tool-carrier head 4 and grasps the device 100, as shown in Figure 1.

Then he/she proceeds to position the dental file U in the right area and exerts suitable pressure on the tool.

At the same time he/she acts on the handgrip 2, manually setting it rotating in the desired direction and thus obtaining the corresponding clockwise or anticlockwise rotation of the dental file U.

The operation of the particular embodiment of the invention represented in Figures 5 and 6 is differentiated from the previous one due to the fact that the movement of the tool U is obtained by the user by exerting pressure on the button 10 that, once having reached the end of stroke, returns to its initial position to allow the device to be operated again.

The operation of the device represented in Figure 7 is differentiated from the previous one due to the fact that the user can set the maximum torque to be transmitted to the tool U in advance, through the adjusting means 15 provided. The above clearly shows that the proposed solution makes it possible to eliminate the drawbacks described and to achieve the set aims.

In particular, the embodiment proposed herein ensures a direct and sensitive control of the cutting tool, thus reducing the stress of the dentist that is going to operate.

This advantageously makes it possible to carry out operations that do not affect the delicate biological balance of the involved area, eliminating the need to use cooling systems to cool the involved parts and reducing the healing times.

Even though the invention has been described making reference to the attached drawings, upon implementation modifications may be made that must be considered protected by the present invention, provided that they are included within the scope of the following claims.

## Claims

1. Operating unit (1, 1a, 1b, 1c) adapted to be connected to a rotary tool (U) for dental use, said unit comprising actuator means adapted to be connected to said tool (U) to transmit the motion generated manually by the user to said tool (U),
**characterized in that** said actuator means comprise a ratchet system adapted to be operated by the user by means of a button (10), so that pressure exerted by the user on said button (10) results in said tool (U) being rotated.

2. Unit according to claim 1), **characterized in that** said ratchet system is of the type with elastic return so that said button once having reached the end of it stroke returns to its initial position.

3. Unit according to any of the previous claims, **characterized in that** it comprises a driving shaft (6) adapted to be rotated by a gear wheel (11) adapted to be actuated by the user by means of said button (1d), said driving shaft (8) comprising first coupling members (7a) adapted to be coupled with second coupling members (7b) integral with a driven shaft (8) of a handpiece equipped with said tool (U).

4. Unit according to claim 3), **characterized in that** said coupling members (7a, 7b) comprise a joint with rapid coupling.

5. Unit according to claim 3) or 4), **characterized in that** it comprises a reduction unit interposed between said actuator means and said driven shaft (8), suited to vary the ratio between the rotation speed of said shafts.

6. Unit according to any of the previous claims, **characterized in that** it comprises also a clutch unit (15) suited to control the maximum torque that can be applied to said tool (U) by the user.

7. Device (100, 101, 102, 103) for dental use, comprising a handpiece (5) provided with fastening means (4) of a tool (U) and an operating unit (1, 1a, 1b, 1c) of said tool, **characterized in that** said operating unit is carried out according to any of the previous claims, and **in that** said actuator means is mechanically connected to said tool (U) so as to transmit the motion generated manually by the user to said tool.

8. Device according to claim 7), **characterized in that** it also comprises locking means that can be selectively activated by the user and are adapted to lock the rotation of said tool.

9. Device according to claim 8), **characterized in that** said locking means act on said actuator means.

10. Device according to claim 7) or 8) or 9), **characterized in that** said operating unit (1b) is removably associated with said handpiece (5).

11. Device according to claims 3) and 10) or 4) and 10), **characterized in that** it comprises replaceable mechanical interface means suited to be interposed between said first and said second coupling members (7a, 7b).

12. Device according to any of the claims from 7) to 11), **characterized in that** said handpiece comprises at least one gripping area (5a) for the user.

13. Device according to any of the claims from 7) to 12), **characterized in that** said fastening means (4) comprise a tool-carrier head.

14. Device according to any of the claims from 7) to 13), **characterized in that** said handpiece also comprises a reduction unit suited to vary the ratio between the rotation speed of said tool and the motion transmitted to said actuator means by said user.

## Patentansprüche

1. Betriebseinheit (1, 1a, 1b, 1c), geeignet für den Anschluss an ein drehendes Werkzeug (U) für den zahnärztlichen Gebrauch, wobei die besagte Einheit Aktuatormittel umfasst, die geeignet sind, an das besagte Werkzeug (U) angeschlossen zu werden, um die manuell durch den Benutzer erzeugte Bewegung an das besagte Werkzeug (U) zu übertragen,
**dadurch gekennzeichnet, dass** die besagten Aktuatormittel ein Ratschensystem umfassen, das geeignet ist, durch den Benutzer über einen Knopf (10) betrieben zu werden, so dass der durch den Benutzer auf den besagten Knopf (10) ausgeübte Druck sich darin auswirkt, dass das besagte Werkzeug (U) gedreht wird.

2. Einheit gemäß Patentanspruch 1), **dadurch gekennzeichnet, dass** das besagte Ratschensystem vom Typ mit elastischer Rückfederung ist, so dass der besagte Knopf bei Erreichen seines Hubendes in seine Ausgangsposition zurückkehrt.

3. Einheit gemäß eines jeden der vorstehenden Patentansprüche, **dadurch gekennzeichnet, dass** sie eine Antriebswelle (6) umfasst, die geeignet ist, durch ein Zahnrad (11) gedreht zu werden, welches mit Hilfe des besagten Knopfes (1d) durch den Benutzer angetrieben werden kann, wobei die besagte Antriebswelle (6) erste Kupplungsmittel (7a) umfasst, die geeignet sind, mit zweiten Kupplungsmitteln (7b) verbunden zu werden, welche eine Einheit mit einer angetriebenen Welle (8) eines mit dem besagten Werkzeug (U) ausgerüsteten Handstücks bilden.

4. Einheit gemäß Patentanspruch 3), **dadurch gekennzeichnet, dass** die besagten Kupplungsmittel (7a, 7b) eine Kupplung mit Schnellverbindung umfassen.

5. Einheit gemäß Patentanspruch 3) oder 4), **dadurch gekennzeichnet, dass** sie eine Reduziereinheit zwischen den besagten Aktuatormitteln und der besagten, angetriebenen Welle (8) umfasst, die geeignet ist, das Verhältnis zwischen der Drehzahl der besagten Wellen zu variieren.

6. Einheit gemäß eines jeden der vorstehenden Patentansprüche, **dadurch gekennzeichnet, dass** sie außerdem eine Kupplungseinheit (15) umfasst, die geeignet ist, das maximal vom Benutzer auf das besagte Werkzeug (U) anwendbare Drehmoment zu kontrollieren.

7. Vorrichtung (100, 101, 102, 103) für den zahnärztlichen Gebrauch, ein Handstück (5) mit Befestigungsmitteln (4) für ein Werkzeug (U) und eine Betriebseinheit (1, 1a, 1b, 1c) zur Betätigung des besagten Werkzeugs umfassend, **dadurch gekennzeichnet, dass** die besagte Betriebseinheit gemäß eines jeden der vorstehenden Patentansprüche ausgeführt ist und dadurch, dass die besagten Aktuatormittel mechanisch mit dem besagten Werkzeug (U) verbunden sind, um die manuell durch den Benutzer erzeugte Bewegung an das besagte Werkzeug zu übertragen.

8. Vorrichtung gemäß Patentanspruch 7), **dadurch gekennzeichnet, dass** sie außerdem Sperrmittel umfasst, die wahlweise durch den Benutzer aktiviert werden können und geeignet sind, die Drehung des besagten Werkzeugs zu blockieren.

9. Vorrichtung gemäß Patentanspruch 8), **dadurch gekennzeichnet, dass** die besagten Sperrmittel auf die besagten Aktuatormittel wirken.

10. Vorrichtung gemäß Patentanspruch 7) oder 8) oder 9), **dadurch gekennzeichnet, dass** die Betriebseinheit (1b) abnehmbar dem besagten Handstück (59) zugeordnet ist.

11. Vorrichtung gemäß Patentanspruch 3) und 10) oder 4) und 10), **dadurch gekennzeichnet, dass** sie ersetzbare mechanische Schnittstellenmittel umfasst, die geeignet sind, zwischen den besagten ersten und den besagten zweiten Kupplungsmitteln (7a, 7b) eingefügt zu werden.

12. Vorrichtung gemäß eines jeden der Patentansprüche von 7) bis 11), **dadurch gekennzeichnet, dass** das besagte Handstück wenigstens einen Griffbereich (5a) für den Benutzer umfasst.

13. Vorrichtung gemäß eines jeden der Patentansprüche von 7) bis 12), **dadurch gekennzeichnet, dass** die besagten Befestigungsmittel (4) einen Werkzeugträgerkopf umfassen.

14. Vorrichtung gemäß eines jeden der Patentansprüche von 7) bis 13), **dadurch gekennzeichnet, dass** das besagte Handstück außerdem eine Reduziereinheit umfasst, die geeignet ist, das Verhältnis zwischen der Drehzahl des besagten Werkzeugs und der durch den besagten Benutzer an die besagten Aktuatormittel übertragenen Bewegung zu variieren.

## Revendications

1. Unité d'actionnement (1, 1a, 1b, 1c) indiquée pour être reliée à un outil pivotant (U) pour utilisation dentaire, ladite unité comprenant des moyens actionneurs aptes à être reliés audit outil (U) pour transmettre le mouvement généré manuellement par l'utilisateur audit outil (U),
**caractérisée en ce que** lesdits moyens actionneurs comprennent un système à cliquet indiqué pour être actionné par l'utilisateur au moyen d'un bouton (10), de façon à ce que la pression exercée par l'utilisateur sur ledit bouton (10) donne comme résultat la rotation dudit outil (U).

2. Unité selon la revendication 1), **caractérisée en ce que** ledit système à cliquet est du type à retour élastique de façon à ce qu'une fois que ledit bouton a atteint la fin de sa course il revient à sa position initiale.

3. Unité selon l'une des revendications précédentes, **caractérisée en ce qu'**il comprend un arbre de commande (6) indiqué pour être pivoté par une roue dentée (11) apte à être actionnée par l'utilisateur au moyen dudit bouton (1d), ledit arbre de commande (6) comprenant de premiers éléments d'accouplement (7a) indiqués pour être accouplés avec de seconds éléments d'accouplement (7b) solidaires d'un arbre entraîné (8) d'une pièce à main doté dudit outil (U).

4. Unité selon la revendication 3), **caractérisée en ce que** lesdits éléments d'accouplement (7a, 7b) comprennent un joint à raccord rapide.

5. Unité selon la revendication 3) ou 4), **caractérisée en ce qu'**elle comprend un groupe réducteur interposé entre lesdits moyens actionneurs et ledit arbre entraîné (8), apte à varier le rapport entre la vitesse de rotation desdits arbres.

6. Unité selon l'une quelconque des revendications précédentes, **caractérisée en ce qu'**elle comprend également une unité d'embrayage (15) indiquée pour contrôler le couple maximum qui peut être appliqué audit outil (U) par l'utilisateur.

7. Dispositif (100, 101, 102, 103) pour utilisation dentaire, comprenant une pièce à main (5) dotée de moyens de fixation (4) d'un outil (u) et une unité d'actionnement (1, 1a, 1b, 1c) dudit outil, **caractérisé en ce que** ladite unité d'actionnement est réalisée selon l'une quelconque des revendications précédentes, et **en ce que** lesdits moyens actionneurs sont reliés mécaniquement audit outil (U) de façon à transmettre le mouvement généré manuellement par l'utilisateur audit outil.

8. Dispositif selon la revendication 7), **caractérisé en ce qu'**il comprend également des moyens de blocage qui peuvent être actionnés sélectivement par l'utilisateur et sont indiqués pour bloquer la rotation dudit outil.

9. Dispositif selon la revendication 8), **caractérisé en ce que** lesdits moyens de blocage agissent sur lesdits moyens actionneurs.

10. Dispositif selon la revendication 7), 8) ou 9), **caractérisé en ce que** ladite unité d'actionnement (1b) est associée de manière amovible avec ladite pièce à main (5).

11. Dispositif selon les revendications 3) et 10) ou 4) et 10), **caractérisé en ce qu'**il comprend des moyens d'interface mécaniques remplaçables indiqués pour être interposés entre lesdits premiers et lesdits seconds éléments d'accouplement (7a, 7b).

12. Dispositif selon l'une quelconque des revendications de 7) à 11), **caractérisé en ce que** ladite pièce à main comprend au moins une zone de prise (5a) pour l'utilisateur.

13. Dispositif selon l'une quelconque des revendications de 7) à 12), **caractérisé en ce que** lesdits moyens de fixation (4) comprennent une tête porte-outils.

14. Dispositif selon l'une quelconque des revendications de 7) à 13), **caractérisé en ce que** ladite pièce à main comprend également un groupe réducteur indiqué pour varier le rapport entre la vitesse de rotation dudit outil et le mouvement transmis auxdits moyens actionneurs par ledit utilisateur.
